# EUROPEAN PATENT APPLICATION

(11) **EP 1 640 874 A1**
(43) Date of publication of application: **29.03.2006**
(21) Application number: 04022625.0
(22) Date of filing: 23.09.2004
(51) Int. Cl.: G06F 17/21, G06F 17/24

(54) **Distributed publishing system integrating internal and external editorial means**

(71) Applicant: UNISYS CORPORATION, Blue Bell, PA 19424 (US)
(72) Inventor: Politi, Andrea, 20090 Trezzano sul Naviglio, Milano (IT); Massimiliano, Negro, 80075 Forio, Naples (IT)
(74) Representative: Modiano, Micaela Nadia

(57) **Abstract**

A publishing system comprises a plurality of internal editorial means for editing internal digital items in a proprietary digital format, the internal digital items including internal digital objects and internal logical pages grouping pluralities of the internal digital objects; wrapping means for encapsulating external digital items, created by external editorial means in a digital format native to the external editorial means, into digital entities provided with a common interface, the external digital items including external digital objects and external logical pages grouping pluralities of the external digital objects; the digital entities comprising first digital data representing the external digital items in their native format and additional digital data representing the external digital item in standard formats, at least one of the editorial means having means for accessing the internal digital items and the digital entities through the standard formats so as to turn the internal logical pages, external logical pages or combination thereof into physical pages.

## Description

### Field of the Invention

The present invention relates to a distributed publishing system integrating internal and external editorial means, particularly suitable for publishing houses to manage the workflow of laying out magazines, newspapers and the like and generating consistent final pages from data edited through a variety of editing applications, be they internal client applications or external, third party client applications.

### Background of the Invention

Nowadays, magazines, newspapers, books, collections of articles and the like, both including traditional paper versions and digital versions available in electronic format over the Internet, involve a plurality of activities that are performed, at different levels in a workflow, by professional staff.

Various software systems have been developed to perform some or the totality of the required operations of the publishing production workflow needed to achieve a final output of a newspaper, magazine and the like.

These production workflow operations include the creation of content items, in the form of text, images, charts and the like; the creation or adaptation to a general layout of the publishing product, for example, the sequence and the size of different thematic sections, such as financial, cultural and sport sections, including general placement methodology for important news and for advertisement messages, the specific page design including formatting and sizing; the management of the integration workflow process, possibly in several publications and editions, with the rules of modification by different users of said items, the printing or release into a final output of all the pages that constitute the final product.

Even though a large variety of actions must be performed within a publishing system, professionals are often involved only in very specific and limited steps within the publishing workflow. For instance, article writers are simply concerned with writing an article in form of text, photographers are required to provide quality pictures or maybe pictures accompanied by a few lines of comment, and so on. On the other hand, the editor must be able to gather information coming from different sources, to format such information according to the publication layout and to generate a more advanced collection of items in the form of a logical page, i.e. a collection of data comprising or linking to several formatted objects, including, texts, pictures, layout data and so on.

Several so called large-scale software systems, which include servers, clients and databases, have been designed to fulfil the majority of the above mentioned required operations for the production workflow of editorial products, mainly within publishing houses.

For instance, the publishing field is one in which the assignee of the present invention has been active for a number of years, and more in particular by producing and selling a large scale publishing system called "Hermes", which supports most of the required operations for the publishing production workflow such as the management, use, integration, formatting and the like of various content items useful for generating newspapers and magazines.

Such large scale publishing systems feature proprietary client applications for editing and handling content items, as for example is the case of the Hermes page designer and text editor client, called NewsRoom.

However, along the years, several small scale publishing software systems have been developed by a plurality of software houses, for example Adobe, Microsoft and Quark. These small scale software applications gained popularity among the users, being dedicated to work on some of the specific operations of the publishing workflow.

The above mentioned software applications have been developed or have been chosen by users to perform only specific operations. For example text editors, such as Adobe InCopy™, Microsoft Word™, Microsoft Notepad™, are mainly used for writing and editing text documents; graphic editors, such as Adobe Photoshop™, Corel Draw™, Paint Shop Pro™, Autodesk AutoCAD™ are mainly used for image and photo creation and manipulation or technical drawings; page layout designers, such as Unisys NewsRoom™, Adobe InDesign™, Quark Express™ are principally conceived for designing the layout of a page comprising different items.

Therefore many users have become familiar and comfortable with using features of these front-end client applications for managing their use of these items and preparing and integrating them for publication.

It has been noticed that users who become accustomed to the use of a specific front-end client application are in general reluctant to switch to other applications, due to the required learning effort for the change, which also implies additional costs for their company.

Moreover there are sectors in the publishing field where professionals are required to deliver content items while being outside their office and/or on the move. Therefore some of the most popular small scale client applications are now available as "light" versions, specifically developed for the use from laptops, handheld devices and the like.

As a result, even though, as said, the most advanced large scale publishing systems do have proprietary client applications for editing and handling all sorts of content items, the need to integrate content items created by external front-end clients within the central large scale publishing system has become apparent.

"External clients" hereby indicates the software clients that are not included in the central proprietary publishing system suite. In most cases, the external clients are third party software applications but they may also indicate company proprietary applications not specifically designed for the publishing system.

"Central publishing system" refers to the software suite that performs the majority of publishing workflow operations, as previously referred to as large scale publishing system, in general comprising a server, a repository and a plurality of clients.

State of the art methods generally used to integrate external digital items, i.e. the content items generated by external clients, within the production workflow of a central publishing system, require the external client to deliver the external item to the central publishing system in a format that is readable within the publishing system and that is a standard or a low-level format for the item document type. For instance, the Rich Text Format (RTF) is used for text documents, JPEG is used for images and so on.

So doing, external items can be actually mixed with internal items, i.e. with items generated within the central publishing system, and may become part of the final magazine or newspaper layout.

Unfortunately, the use of low-level formats frequently implies that some native document information is lost, such as for example the formatting and the designing aspects of the document, aspects that may even result important for an appropriate message communication to newspaper/magazine readers.

Moreover, when such state of the art methods are used, users cannot take advantage of the technology progress or peculiar features of the external client complex editing functionalities, in that such functionalities may not be foreseen or represented in a low level interchange format. This forces the users to use simple editing functionalities that are not up to pace with the most recent changes in the way publishers present information, as for example the use of windows, diagrams and summary charts.

Another method used over the years to achieve some sort of integration includes setting up a client-server environment in which a client application connects to a server application by way of client libraries, i.e. pieces of code that offer specific APIs (Application Program Interfaces) to the clients. The clients can link to the library and invoke functions exported therefrom. However, this is a very limited way of communicating between software elements, first of al all because the client needs to be recompiled to address calls to the specific libraries and thus use server functionalities. Changes in the server-side code often require modifications on the client-side code as well, so that maintenance of the system becomes very burdensome. Such intervention on the client-side code may be very hard or even impossible to implement.

Therefore, it is a felt need to accommodate the users who wish or have to use external clients, by letting their content items, generated by said external clients, be smoothly manageable by the central publishing system along the workflow process, without any loss of information from the native file format, so that the usefulness and benefits provided by a central system as well as the added value of user-selected front-end client systems can be maintained in a synergistic manner.

### Summary of the Invention

Object of the present invention is to overcome the above mentioned drawbacks, by providing a central publishing system in which external items, both in form of external objects or external logical pages, created by said external clients, can be managed by internal clients of the central publishing system and in which, at the same time, the external pages and objects are handled in a way that any of the native information is not lost.

A further object of the present invention is to provide means for exporting layout information from the publishing system to external clients, so that external logical pages can be created in accordance with predefined layouts available within the central publishing system.

Another object of the present invention is to allow modularity and extendibility of the central publishing system towards external clients of different third party vendors in a way that is transparent both for the users of the publishing system and for the users of the external client applications. Particularly, an object of the invention is to provide a platform that allows to externalize proprietary, server side functions and make them available to any external client without requiring recompiling or regenerating of the external client application.

Yet another object of the present invention is to provide access to the publishing system in a reliable manner, preventing external clients from directly accessing the publishing system database and repository.

These objects and other which will become better apparent hereinafter are achieved by a publishing system comprising a plurality of internal editorial means for editing internal digital items in a proprietary digital format, the internal digital items including internal digital objects and internal logical pages grouping pluralities of said internal digital objects; wrapping means for encapsulating external digital items, created by external editorial means in a digital format native to the external editorial means, into digital entities provided with a common interface, the external digital items including external digital objects and external logical pages grouping pluralities of the external digital objects; the digital entities comprising first digital data representing the external digital items in their native format and additional digital data representing the external digital item in standard formats, at least one of said editorial means having means for accessing the internal digital items and said digital entities through the standard formats so as to turn the internal logical pages, external logical pages or combinations thereof into physical pages.

Advantageously, the publishing system comprises repository means, accessible by access server means, for locally storing digital items and digital entities. The internal access server means provide internal services for reading from the repository, writing to the repository and querying the repository; middleware means are provided bridging said external editorial means and said internal services, so as to export the functionality of said internal services.

The internal and external digital items may comprise one or more of text, images, charts, page layout information, or combinations thereof. Conveniently, standard format representing the external digital item may comprise an image format for visualizing the external digital item within a different client application and/or a graphical format for printing the external digital item from a different client application.

The provided middleware means also comprise means for returning digital items from the publishing system to the external editorial means in the native format of the editorial means, which have been used to create and/or edit the item. So doing, it is guaranteed that no information is lost when the item is saved into the publishing system. Saving in the publishing system and return the item may be performed by either actually storing native digital data in the repository or storing a link to a different address in which the actual native digital data is stored. The same applies to additional data in standard formats appended to external digital items.

In order to allow external clients to generate pages somewhat aligned with a publication, the external editorial means may comprise means for retrieving page layout information provided within the publishing system. The editorial means may be any of a page design program, a text editor or word processor, a graphic editor, a supervising program or any application which may be used to create or edit data meant for publication.

Preferably, the middleware means comprise a plurality of web services generating a format field and providing standardized connections between the internal access server and the front-end clients. Particularly, the format fields and the digital entities can be described in SOAP/XML and HTTP may be used for transmission between said external clients and said internal access server, as it will be illustratively explained hereafter.

### Brief Description of the Drawings

Further characteristics and advantages of the invention will become better apparent from the following description of preferred but not exclusive embodiments of the publishing system, illustrated by way of non-limitative examples in the accompanying drawings, wherein:
Figure 1 is a block diagram of a publishing system, schematically showing a system architecture according to the present invention, including client applications and access server means for accessing a repository;
Figure 2 is a block diagram detailing access server means according to an embodiment of the present invention;
Figure 3 is a block diagram illustrating internal and external digital items within the publishing system according to the invention;
Figure 4 is a flow diagram illustrating exchange of information between external client and the central repository.

### Detailed Description of the Invention

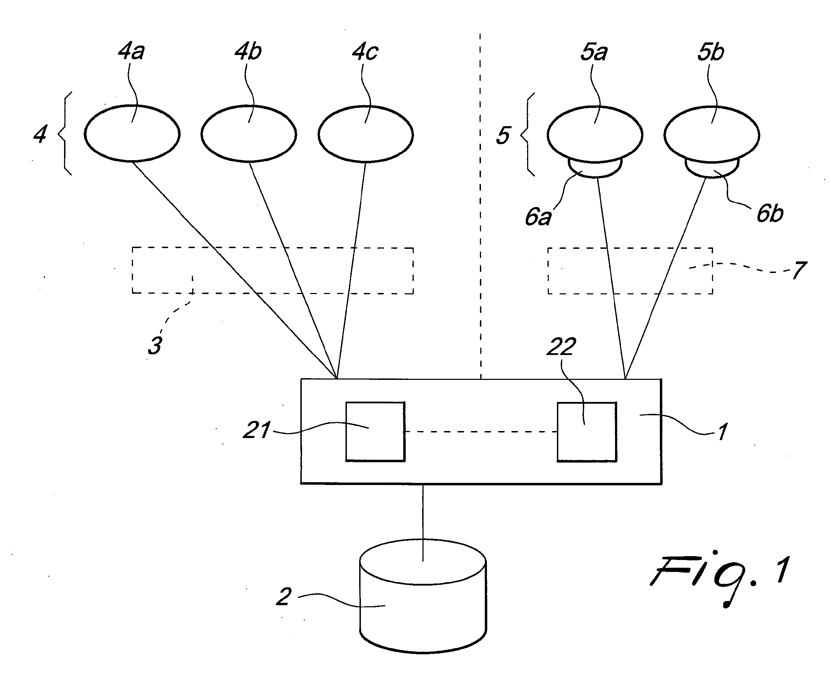

Figure 1 shows a block diagram of a distributed publishing system according to the present invention, integrating the functionality of internal and external editorial applications, by which term it is to be intended any application which may be usable for creating, editing, manipulating or accessing data for publication.

The publishing system comprises a repository access server 1 for accessing a repository 2, which comprises a database and a file system.

The repository access server 1 is accessed by internal editorial applications 4, i.e. by editorial applications that are internal to the proprietary publishing system and that may include, for instance, a page designer, a text editor, an image manipulator, a publication planner, a search engine, an advertisement interfacer and the like.

For example, NewsRoom 4a is a page designer and a text editor internal to the Hermes system, Unisys proprietary publishing system, while Supervisor 4b is the editorial application used in the Hermes system to plan the newspaper or magazine by managing publications, editions and to drive final output of all pages.

In this regard, it is mentioned that the Hermes publishing system will now be often taken as an example of a proprietary publishing system for clarity reasons and for sake of simplicity. However, it is explicitly stated and trivially understood by the skilled in the art that this should not be considered a limiting factor for the instant disclosure, the same considerations identically applying with regard to other proprietary publishing systems.

Internal clients 4 communicate with the repository access server 1 through a remote access protocol layer 3, which in the case of the Hermes publishing system is a proprietary protocol over TCP/IP.

The elements so far described define a conventional proprietary and distributed publishing system, wherein a repository storing digital data is accessed by a plurality of internal client applications according to proprietary formats, protocols and access rules.

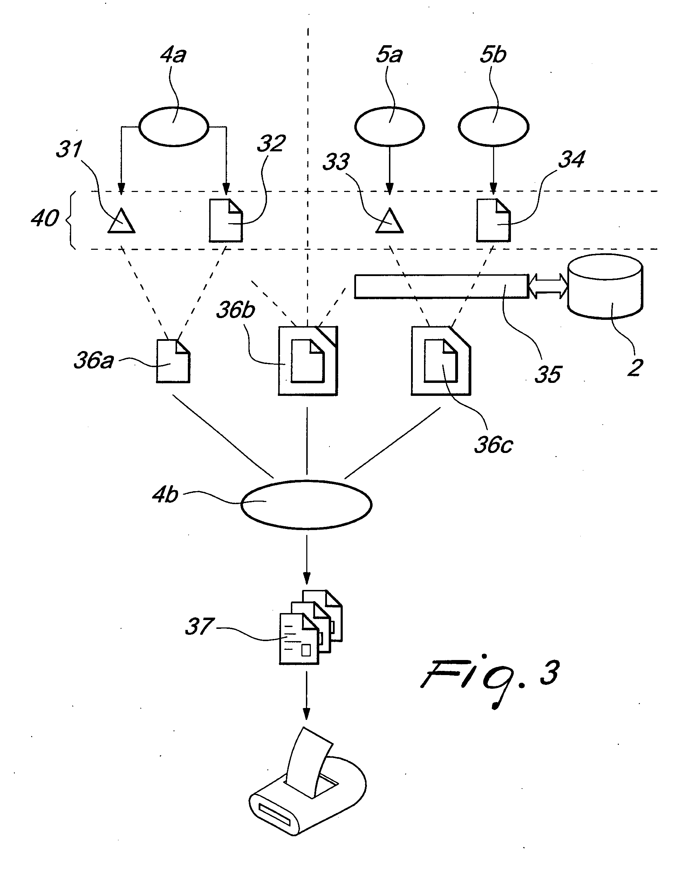

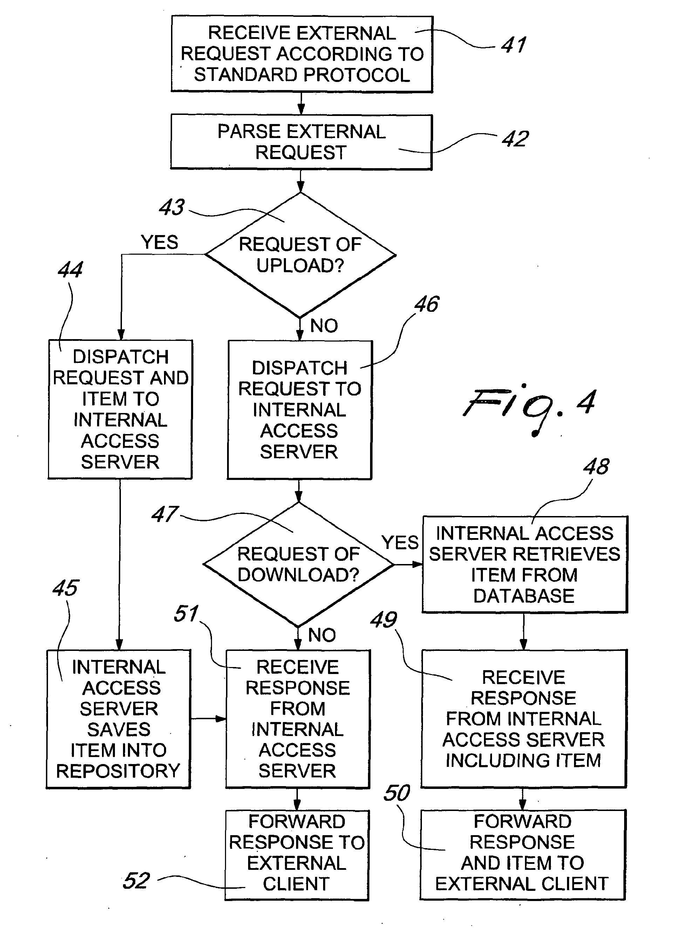

Further to the above described components, Figure 5 displays external clients 5, which are basically third party proprietary editorial applications or other applications external to the central proprietary publishing system.

Adobe proprietary editorial applications, e.g. InDesign 5b, a page designer, and InCopy 5a, a text editor, are illustrative examples of such external clients.

In order for external clients to interact with conventional central publishing services, the external clients are extended with dedicated external plugins 6a, 6b and the repository access server is extended with an External Application Server (EAS) module 22, which is provided with means for connecting the external clients 5 with the repository 2. To this purpose, the external application server module 22 bridges the Internal Access Server (IAS) module 21 to the external clients 5 through a communication based on a standard protocol 7, as it will be better explained hereafter.

It is noted that, for the sake of clarity, all of the server modules are described as belonging to a same server. However, the skilled person in the art easily appreciates that such modules could be located on physically separated or remote machines, connected with one another through conventional communications networks and techniques.

The IAS module 21 is meant to fulfil the incoming requests of publishing services from the external 5 and internal clients 4 by accessing the repository 2, in which files, pages and information used by the publishing system are stored.

To this aim, the IAS 21 is provided with interface means allowing internal clients to exchange information to and from the repository, either through a standard communication protocol or, and preferably, as already cited with regard to the Hermes system, through a proprietary and dedicated protocol 3.

When external clients 5 are involved, a middleware is therefore provided to add to the conventional publishing system service means capable of integrating external clients to the proprietary publishing system. In Figure 1, it is seen that such middleware comprises the EAS module 22, the external plugins 6a, 6b, the standard protocol layer 7.

The term "middleware" as used herein is intended to be accorded a broad definition. In general, "middleware" encompasses software that connects two otherwise separate applications. It is well known, however, that such "middleware" can be partially and effectively integrated into one of the applications, e.g., it could be implemented as an import or export feature of one of the applications. Therefore, unless explicitly stated otherwise, use of the term "middleware" is not intended to limit the present invention to scenarios wherein the middleware layer is kept separate from one or the other applications. For example, the present invention may be practiced by making the middleware layer a part of the publishing system server, as shown in the figures.

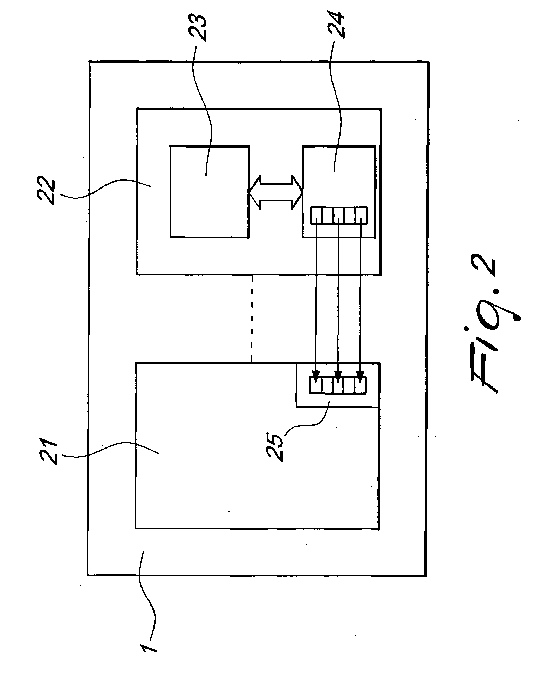

Preferably, the middleware comprises a plurality of web services generating a format field and providing standardized connections between the internal access server 21 and the front-end clients. Particularly, the digital entities can be described in SOAP/XML and HTTP may be used for transmission between said external clients and said internal access server, as it will be better shown with reference to Figures 2 and 4.

Again, the term "web service" is intended to be construed broadly and to encompass a software system, which may be identifiable by a uniform resource identifier (URI), whose public interfaces and bindings are defined and described using a marked-up language like XML.

In this manner, the web service definition can be discovered by other software systems, which may then interact with the web service in a manner prescribed by its definition, using XML based messages conveyed by Internet protocols.

Figure 3 is a block diagram detailing internal and external digital items 31, 32, 33, 34, created respectively by internal and external editorial client applications 4a, 5a, 5b, within the publishing system according to the present invention.

Digital items hereby identify either digital objects, e.g. text, images, charts and the like, or logical pages, e.g. structured collections of digital objects preferably including optional layout information.

Within the proprietary publishing system, the planning of the final layout of a newspaper or magazine is performed by handling logical pages 36a, 36b, 36c.

Logical pages can be seen, from a more abstract point of view, as folders in which content, like some news with pictures, is positioned in a certain layout. Logical pages, however, are distinguished from physical pages in that they do not represent the actual final page.

For instance, logical pages can be superimposed one another and they are not assigned a page number until when they are ready for release, i.e. when are imposed onto physical pages 37, for instance to be printed onto plates.

For example, in the Hermes publishing system, internal digital items can be created by NewsRoom 4a, one of the internal editorial client applications. As already mentioned, NewsRoom may function both as a page designer and a text editor, so that it can produce digital items in the form of both digital objects 31 and logical pages 32.

As an example of external digital items, digital objects 33 and logical pages 34 produced by external editorial client applications are shown in Figure 3.

For instance, digital objects 33 may be text generated through Adobe InCopy 5a while logical pages 34 may have been created by the Adobe InDesign 5b page designer.

According to the invention, external editorial applications 5a, 5b are extended with the capability of creating, inside the central publishing system, a variety of external digital items 33, 34, which items, once saved into the central system, can be used as if they were internal items to create final output pages.

Still with reference to Figure 3, three different kinds of logical pages are identified: internal logical pages 36a, hybrid logical pages 36b or external logical pages 36c.

Internal logical pages 36a indicate structured collections of internal items 31, 32, as traditionally created by the proprietary publishing system.

External logical pages 36c indicate structured collections of external items 33, 34, as fully created by the client applications external to the publishing system.

Hybrid logical pages 36b indicate structured collections of items, wherein at least one item originates from internal clients 4 and at least one item originates from external clients 5.

In any case, all of these logical pages that can be handled by some publishing system proprietary editorial applications 4b to create physical pages 37.

More in detail, handling of external digital items by internal editorial applications includes the operations of viewing the content of the external digital items, requesting re-editing of the item, merging with internal digital items to create hybrid logical pages and preparing physical pages to be printed onto plates. For instance, still referring to the Hermes publishing system, the latter operation is performed by the so called Supervisor application 4b.

Clearly, digital items 33, 34 created with external editorial applications 5 are different from those created with internal editorial clients 4 such as NewsRoom 4a and carry information in a different format.

For this reason, their saving into the publishing system repository requires additional information to be added to the item, allowing proper identification. This operation is performed through interfacing means 35 which labels the external digital items 33, 34 as being of external type and provided with data representing the digital item 33, 34 both in a native file format, to be reopened by the native external application, and in at least one standard file format, so that handling can be performed within the proprietary publishing system.

The actual data, or a link to the files containing actual data, is stored in the repository 2. Examples of standard formats are JPEG, PDF allowing the preview of external digital items and EPS (Encapsulated Post Script) to allow preview and printing.

As an embodiment of the present disclosure hereinafter it is explained how external digital items are handled within the Hermes repository or database.

Digital items, such as pages and texts, created by Adobe InDesign and Adobe InCopy are stored in the database as graphical objects, labeled as INDD_obj and INCD_obj object types, respectively.

For page handling, the database entry of an INDD_obj comprises or has a link to files in EPS format, JPG previews and native files, all generated by InDesign.

An InDesign item is always associated with, and paginated in, a logical page, created automatically when the document is saved in the publishing system.

To enforce integration, InDesign is still able to access pages in the publishing system database and does not access directly the associated object, created only for publishing system specific implementation purposes.

Plugins for InDesign and InCopy have to handle these object types accordingly.

InDesign has a need to query the database for objects of INDD_obj type, for opening pages, and for objects of INCD_obj type, for paginating InCopy documents.

The database entry of an INCD_obj object has a link to a standard image preview and the native file. When an InCopy document is paginated in an InDesign logical page, the link information has to be stored and made accessible in the database.

The steps and techniques used to provide such additional data to external digital items and the functioning of the system is hereby described with reference to Figure 4.

It is assumed that the conventional publishing system as described with elements 1, 2, 3, 4 of Figure 1 allows internal editorial applications 4 to perform any operation associated with the creation, editing, manipulation and access of digital items 31, 32.

For instance client application 4a is a text editor through which the user can type the text of an article and save it for further use as internal digital object 31. Editorial application 4a may also operate as a page designer to create logical pages 32, which may also group digital objects 31 created by other internal editorial applications 4.

As said, a logical page is a structured collection of digital content elements defining a full or a portion of a possible final physical page 37 to be released.

In a most general system architecture client applications 4 are not limited to a closed or local area but are spread around a wide area, and they remotely access the central publishing system which is storing all digital data required to the definition of the final magazine or newspaper in the repository 2.

Often, in a publishing system environment a plurality of users utilizes same or different types of editorial applications 4a, 4b, 4c for the creation and the manipulation of digital items to obtain a final newspaper or magazine. In order to manage the workflow of such a plurality of users a logical page 32 is first created, then the various text or image containers are assigned to different users, in form of digital objects 31.

These different users can thus open the digital object 31 assigned to them and can edit to fit. In this way, multiple users are able to work on different digital contents present on the same page, while the page layout typically is modified by a single user only.

Once users have prepared, utilizing an internal client application 4, a piece of information, which may be the text of an article, some pictures, or a combination thereof 31, 32, they submit a save request to the publishing system through interface means provided for in the internal client application 4. The saving operation includes the transferring of data according to a proprietary protocol 3 to the internal access server 21.

The IAS 21 receives and parses the incoming request and performs accordingly, for instance by storing a copy of the received digital item into the repository 2 and by updating data and links in the database. The same applies with regard to any other service involving requests to the IAS.

The central publishing systems supports a range of editorial services useful for the production workflow of newspapers or magazines.

Specific example of editorial services in Hermes are services for managing digital objects, such as creation, deletion, retrieval of objects, services for managing pages, such as creation, deletion, retrieval of pages, services to link or unlink objects to pages, services for managing editions, such as edition listing or zone management, services for managing workflow, such as status management and locking/unlocking of objects and pages, services for managing users, such as user data retrieval and permission checking, and services for managing levels, such as level browsing.

A level can be viewed as a folder on a file system; for example, a sport page could be created into a level called "publications/editorial/sport". An article could be saved into "publication/editorial/sport/articles" and the relevant images could be saved into "publication/editorial/sport/pages/images". The level names are decided at configuration time and can vary. Obviously, to uniquely identify a level, the publishing system uses the unique level identifier.

Referring now to the flow diagram of Figure 4, it is explained how external clients can request editorial services provided by the IAS 21 by means of the EAS 22, thus allowing interaction between external clients 5 and the central publishing system repository 2 and even integration of the external clients 5 in the publishing workflow of a proprietary publishing system.

An external client 5, by means of the plugins 6, sends a service request to the EAS 22, which request is encoded according to a standard protocol 7.

At step 41, the request is received by the EAS 22, which checks the nature of the request and parses its content at step 42.

Particularly, at step 43, the EAS determines whether the request is an upload request or not. In the present disclosure, "uploading" identifies an operation of saving data representing digital items into the repository 2 of the central publishing system, i.e. it identifies a flow of data from the clients towards the server.

If the EAS 22 identifies such an upload request, at step 44 it dispatches the request, together with the data representing the external digital item, to the IAS 21, which in turn updates item data and links in the repository database 2 at step 45.

Instead, if the request does not involve any upload, the request alone is dispatched to the IAS at step 46.

At step 47 the IAS 21 checks whether the request is a download request, i.e. a request to transfer a digital item from the server to one of the clients. If so, the IAS 21 retrieves the item data from the repository 2 at step 48, then passes item data together with the response to the request to the EAS 22 at step 49.

Eventually, the EAS 22 forwards the response to the external client 5 at step 50 together with item data. If the request is not a download request, the EAS 22 receives the response from the IAS 21 at step 51 and eventually forwards it to the external client at step 52.

Once stored in the publishing system repository 2, external items become available for interaction with internal editorial client applications 4.

For example, referring to the exemplary Hermes publishing system, NewsRoom 4a can preview an external page or an external digital object, by making use of the standard format file present in the database. In the same way, NewsRoom can also add to an external logical page internal digital objects and create hybrid logical pages.

If a further modification on an external item is required, its native external application can re-edit the digital item, by obtaining the native file format through a download request to the central database, as described in steps 48 - 50.

Requests do not necessary refer to downloading and uploading of data, but also relate to querying the database 2 to obtain or setting information. In this regard, further interaction examples are given by the integration with a search engine, which can be an internal search engine 4c or and external search engine, and with an application which is in charge of supervising the publishing workflow and finalizing logical pages into physical pages, as it is for instance the Hermes Supervisor.

The search engine 4c can perform queries on the central database on external logical pages and external digital objects linked to logical pages.

The supervisor 4b is provided with means for handling internal logical pages, together with external and hybrid logical pages, and turn them into physical pages ready for release by making use of the printable standard format, for example EPS, stored in the database.

Through the integration of editorial applications within the proprietary publishing systems users utilizing external editorial clients can also work on different external objects belonging to a same logical page, all the objects and pages being managed by the central publishing system.

Each external digital item is referenced in the server repository thereby making the external item accessible within the publishing system so that the publishing system can track the object, manage the permissions to access it, and/or output the item alone or in conjunction with items produced by clients onto specific printers used in the editorial environment.

To better improve interaction between external clients and the proprietary publishing system, certain elements, herein defined as ancillary information data, are introduced. Examples are grid information, edition date, levels and the like.

In the Hermes system for each logical page of a predefined edition and level, a grid information, defining the page layout sizing information, is stored within the central publishing repository.

In such a way, external pages created within the central publishing system have dimensions consistent with internal pages. In fact, as it will be better explained hereafter, during the external page creation process the external client receives said grid information from the central database.

During the information exchange between the central publishing system and its clients, workflow features suck as the operations of locking and unlocking of digital items and permissions are maintained through means for switching digital items between an unlocked status, indicating that the digital item is free for use by a client, and a locked status, indicating that the digital item has already been reserved for use by another client.

Digital items, when opened and created, are locked by updating their lock status variable in the repository and, when released, are unlocked, by changing their lock status variable. By locking and unlocking the status of a digital item, the central publishing system can therefore manage permissions to access items in the database and prevent inconsistencies caused by users that access an item while being edited by another user.

Moreover, each newspaper or magazine can be viewed as a set of pages aggregated into editions and each edition can be inherited into other editions so that a page can have the same editorial content in different zones and different advertising content, one for each zone. This relates to content reuse, i.e. where the news is the same in a given country or region but the advertising depends on where it is published, which, again, is not affected by the use of external items according to the invention. This inheritance process can be maintained within the central publishing system also when dealing with external items.

Referring now to a preferred embodiment of the invention, communication and exchange of information between the external client and the proprietary publishing system is performed through SOAP/XML calls to define and enable handling of digital items, while HTTP is used for transmission between the external clients 5 and the server 1.

The server is operable as a web service, generating a format field and providing standardized connections in HTTP/XML/SOAP between the publishing system and the external clients 5.

Technically speaking, SOAP (Simple Object Access Protocol) is a lightweight protocol for exchange of information in a decentralized, distributed environment and it has been defined as the transport protocol of XML (eXtensible Markup Language) over HTTP.

More in detail, SOAP is an XML based protocol that includes three parts: an envelope that defines a framework for describing what is in a message and how to process it; a set of encoding rules for expressing instances of application defined data types; a convention for representing remote procedure calls and responses.

Web services can be called with messages that are written in the SOAP format. When using SOAP, a client-side component may allow an application to invoke XML Web service operations.

Figure 2 is a block diagram detailing the repository access server 1 according to the present invention when realized in SOAP modules, according to a preferred embodiment. The SOAP modules 23, 24, together with the IAS 21 and EAS 22 modules, must be read as exemplary functional components which do not limit the present invention.

The EAS comprises a SOAP Application Server (SAS) 23, which acts as interface between the external clients 5a, 5b and the SOAP Core module 24. The SOAP Core module comprises a SOAP Service Registry module 26 where the available web services 25 provided by the Internal Access Server are mapped and called upon request.

The SAS 23 is in charge of receiving SOAP requests from the external clients 5. The SAS 23 checks the HTTP header of each external client request for validity of session ID and SOAP Action values. If these values cannot be verified, the request is not handled and an error is returned to the external caller in the form of a SOAP fault.

If the HTTP header is valid, the SAS 23 passes the SOAP request to the SOAP Core module 24, which looks up for the requested service.

If the SOAP Core module 24 finds inside the SOAP Service Registry module 26 the requested service, it dispatches the SOAP call to the specific Web service for being processed.

The SOAP Core 24 offers a set of methods to the Web services 25, allowing to get parameters from the SOAP call, get the value of the parameters appropriately converted to language specific types used by the Internal Access Server 21, for instance C/C++, create the SOAP response to the call and abstract any specific XML construction and handling, as clearly understood by the skilled in the art.

The SOAP Service Registry module 26 lies in the SOAP Core 24 and is responsible of maintaining a list of available services and the mapping between SOAP methods and services that implement them.

In order to keep a high level of extensibility, the services are preferably mapped to specific calls via an XML file, called deployment file, that is read at the server start up. So doing, enabling or disabling specific services simply implies removing the mapping inside the deployment descriptor.

Internal Access Server Hermes Web Services are components that are plugged into the integration platform to perform the real request processing and have the responsibility of wrapping the publishing system legacy code into object-oriented components that are instantiated by the platform. This implementing solution minimizes the effect on the publishing system and the implementation can leverage existing API, thus minimizing the effort to make the original publishing system an open system.

Entering into further details of the exemplary SOAP/XML based implementation of the invention, a set of integration functions for page and object handling is described hereafter, showing how two external client applications 5, namely Adobe InDesign and Adobe InCopy, become part of the suite of a central publishing system, which, in the following example, is Hermes from Unisys. Particularly, the following exemplary description is illustrative of how external applications actually access content stored in the database, save pages and objects in the database and support workflow.

An XML-schema is used to define a class of XML documents. A schema is a collection of type definitions and element declarations whose names belong to a certain target namespace, wherein target namespaces enable one to distinguish between definitions and declarations from different schemas.

A schema can include definitions for elements corresponding to messages and functions that may be performed in connection with the exemplary Hermes publishing editorial system.

A schema file acts as a contract between the integration platform for the publishing system and the front-end clients and it defines the data type, parameters and the methods that can be used to communicate over HTTP. In this way, a complete independence between the client and the server implementation and platform and physical location is obtained.

According to an implementation of the invention in which the publishing system is Hermes from Unisys, in order to complete the pagination within the publishing system and to be tightly integrated with the publishing system itself, the middleware SOAP framework provides a set of APIs to allow InDesign to create logical pages and InCopy to create digital objects inside the publishing system.

Adobe InDesign and InCopy are extended with plug-ins to perform a complete interaction with Hermes Editorial System.

For instance, the InDesign application is extended through a plugin so that it can perform the following functions: "Create Object", "Get Page Grid", "Open Page", "Create Page", "Delete Page", "Query Pages", "Query Objects", "Link Object", "Release Page", "Load Page Grids", "List Page Grids".

InCopy is extended through a plugin that allows to perform the following functions: "Query Objects", "Release Object", "Save Objects", "Open Object", "Create Object".

The above list of functions is only an example of the functions that may be implemented to allow external clients to access objects and pages, and it shall not be taken as a limitative or mandatory requirement.

The meaning of such functions is easily perceived by intuition by the skilled of the art in the light of the foregoing description. For instance, the "Create Page" function added to Adobe InDesign allows users to create a new external page, also based on the available page grids according to a chosen level.

In this way, the central system ensures that pages created by external applications are consistent with the size of internal pages.

To load a chosen grid data, the client application invokes the "Load Grid Data" SOAP API call, specifying the "Levelld" that the application is querying.

The central publishing system then returns a list of available editions according to the chosen level. This action results in the creation of a new record for a logical page in the central publishing system database and the locking of this record. An initial status is set for the created page.

Table 1 shows an exemplary SOAP definition of the "Create Page" function while Table 2 refers to the "Load Grid Data" function.

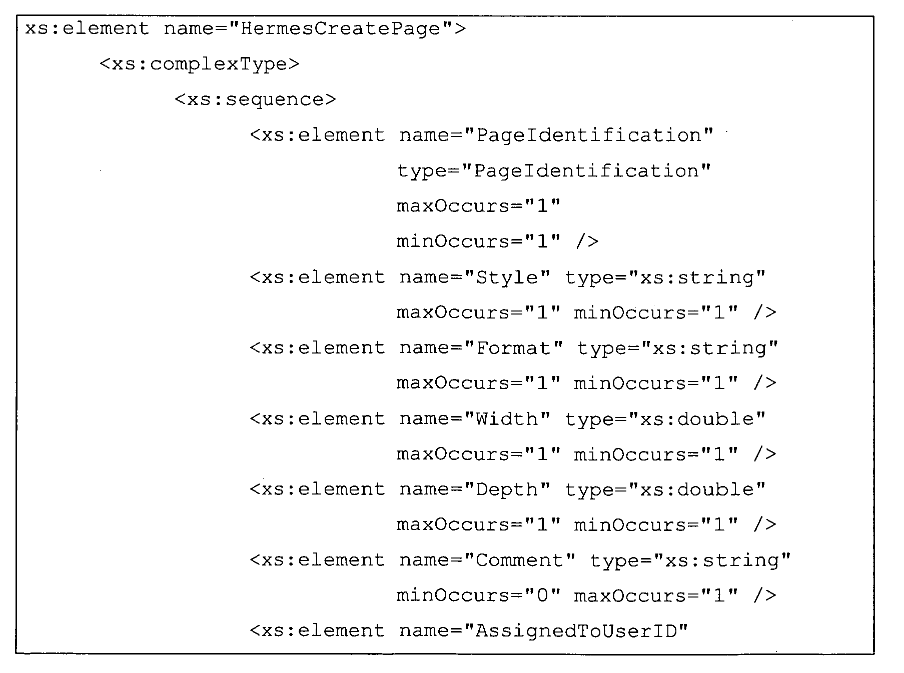

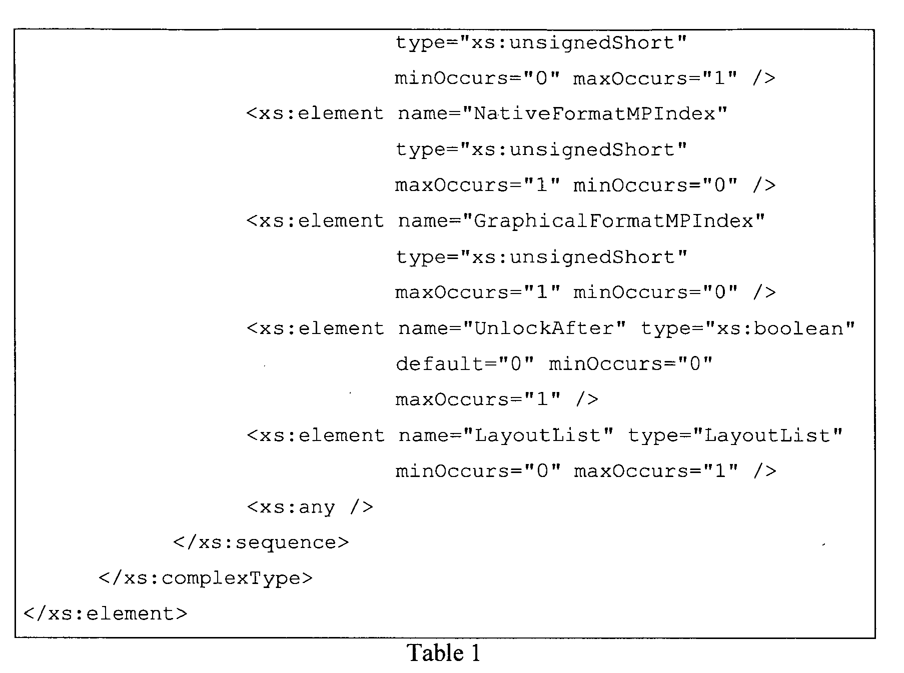

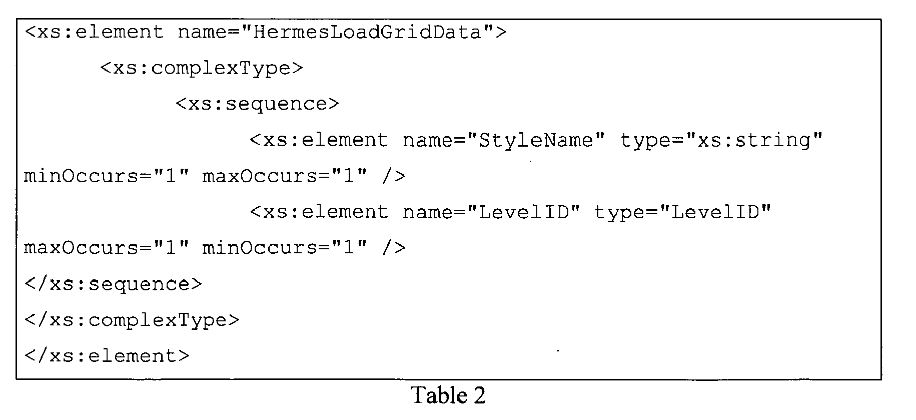

The "Save Page" function in Adobe InDesign allows saving an external logical page by displaying a dialog window where users can specify a "Level" and "Edition". The save operation updates the external record in the database. As it is clear from the foregoing description, the process of saving pages requires that also the native external document be sent by the client application. Each time a save operation is performed to the central repository, the client application attaches additional data so as to let other clients, particularly internal clients 4 which may unable to handle the native format of the digital item, visualize or print the object.

Table 3 shows an exemplary SOAP definition of the Create Page function.

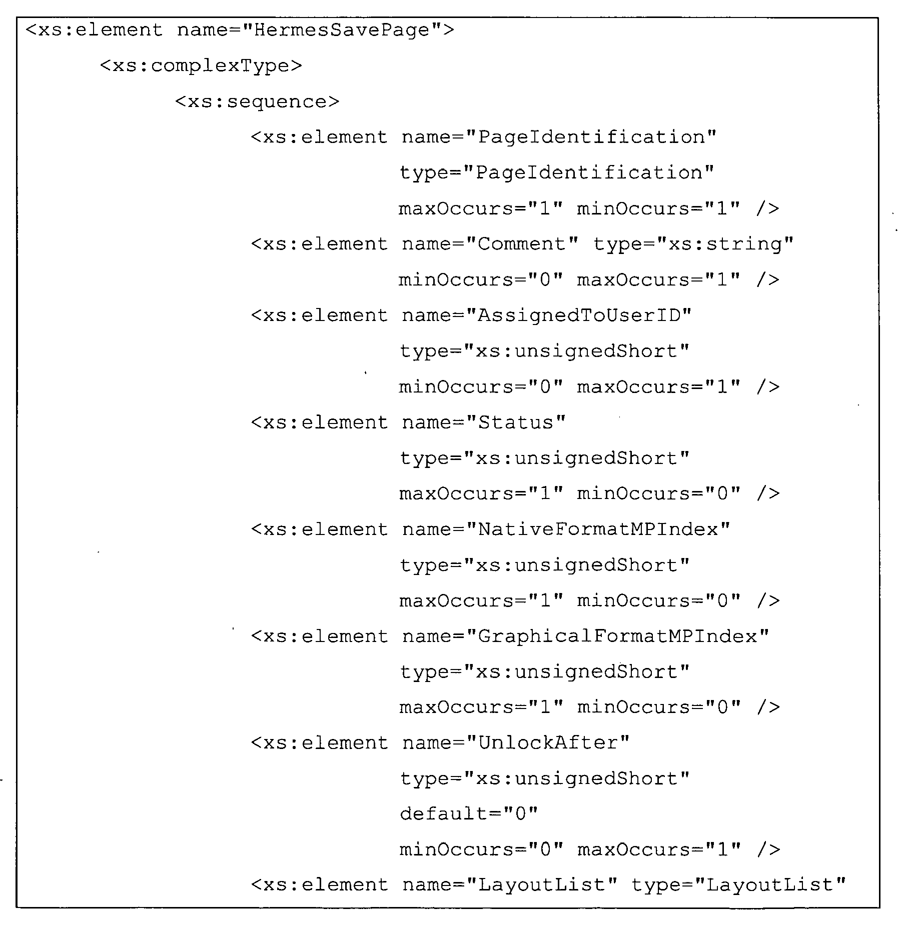

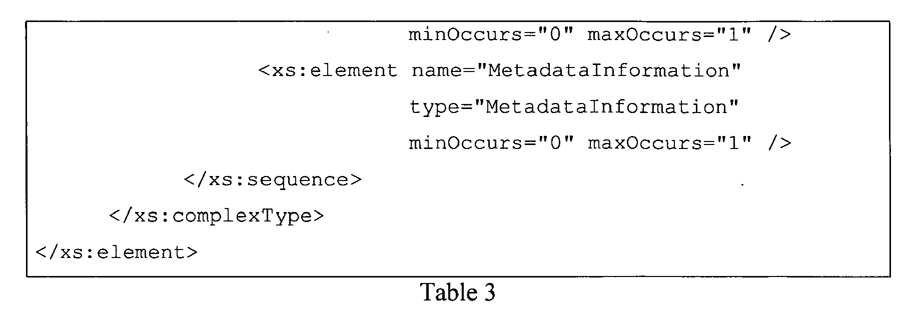

The "Create Object" function in Adobe InCopy allows users to create a new text object. The application requires the users to enter the object level. The publishing system, in response to the "Create Object" call, returns a list of available editions according to the chosen level. In addition, users have to provide a name for the object being created. This action results in the creation of a new record for an object in the publishing system database and the locking of this record. An initial status is set for the created object.

Table 4 shows an exemplary SOAP definition of the Create Object function.

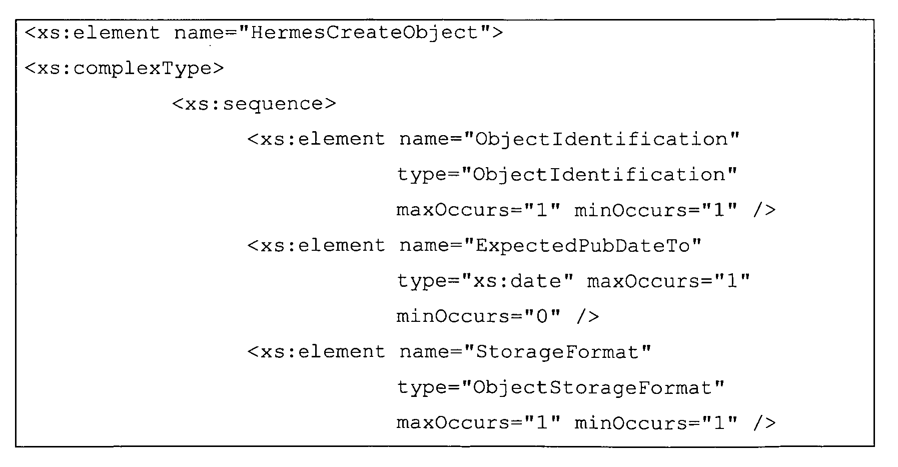

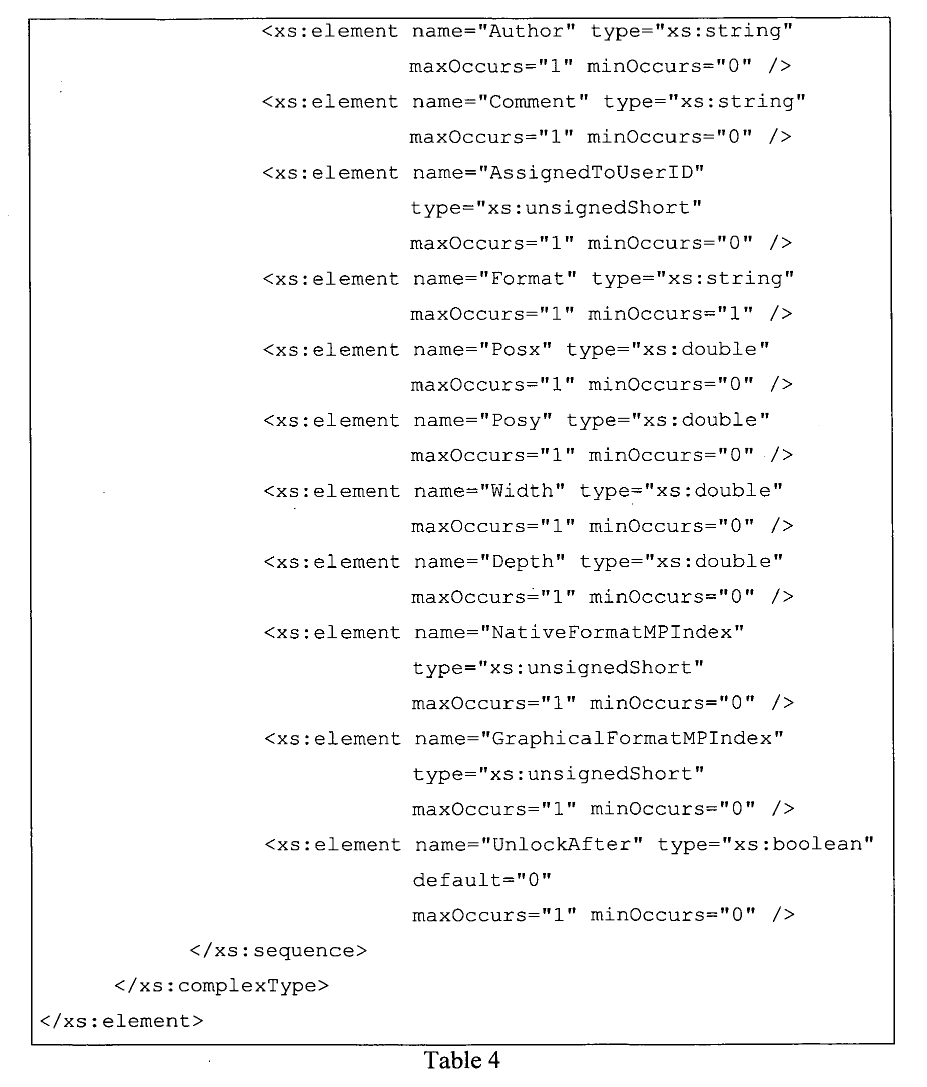

The skilled in the art now easily understands how SOAP messages are defined for other required calls, so that the SOAP message definition is not listed for each of the calls. The following operations performed by the "Save Object" and "Link object to page" are now described without including the related, trivial SOAP code.

The "Save Object" function allows to save an object and, again, requires the users to specify "Level" and "Edition", together with an "Object" name. The save operation updates the record in the database. The process of saving pages requires the native textual document to be sent by the client application. Each time a save operation is performed, the external application attaches additional data in a standard format, for instance in JPEG format, so that the publishing system client applications are able to visualize the object.

The "Link object to page" function allows to paginate objects in Adobe InDesign pages, either via menu item or, after executing a query, from the query results. The selected object can be paginated, provided that it is not already linked to another page. Files from the file-system are placed into InDesign documents only after they have been inserted into the publishing system database 2.

If a local file is placed on a logical page, users are asked to create the object in the central publishing system database 2 by providing "Level", "Edition" and name of the object being created.

If the creation succeeds, a high-resolution object is uploaded to the publishing system repository 2 and a low-resolution representation, generated by the publishing system, is downloaded for placement using the object ID to link the asset to the page.

If placed files are image files, appropriate OPI comments are inserted into the EPS to reference the high-resolution path of the image within the publishing system file system. Furthermore, the EPS preferably contains OPI comments for the transformations applied to the image.

If a local text is inserted in page, a new InCopy object is created and then placed inside the page.

The above described functions are preferably made accessible to the user through a dedicated tool palette providing shortcuts to function calls inherent the publishing system, which palette is made available into third party applications. In this way, the addition of SOAP functionality for interacting with the central publishing system is fully transparent, in that the external client still works exactly in the same way as intended by its programmers and can be still fully used by users conventionally. Accessing the central system is performed by interacting with an additional tool palette integrated within the client application, which tool palette accesses corresponding plugin code to execute the necessary SOAP calls connecting the external clients with the central publishing system.

While exemplary embodiments of the present invention have been described in connection with certain computing devices and network architectures, the underlying concepts may be applied to any computing device or system in which it is desirable to define interfaces or services between devices or objects across a network. Thus, the techniques described herein for facilitating interoperability between various front-end clients and a server may be applied to a variety of applications and devices. Furthermore, while exemplary programming languages, names and examples are chosen herein as representative of various choices, these languages, names and examples are not intended to be limiting. One of ordinary skill in the art will recognize that such languages, names and examples are choices that may vary depending upon which type of system is implicated, and the rules for the system. Although particular names for software components are utilized herein for distinguishing purposes, any name would be suitable and the present invention does not lie in the particular nomenclature.

The various techniques described herein may be implemented in connection with hardware or software or, where appropriate, with a combination of both. Thus, the methods and apparatus of the present invention, or certain aspects or portions thereof, may take the form of program code (i.e., instructions) embodied in tangible media, such as floppy diskettes, CD-ROMs, hard drives, or any other machine-readable storage medium, wherein, when the program code is loaded into and executed by a machine, such as a computer, the machine becomes an apparatus for practicing the invention. In the case of program code execution on programmable computers, the computing device will generally include a processor, a storage medium readable by the processor (including volatile and nonvolatile memory and/or storage elements), at least one input device, and at least one output device.

One or more programs that may utilize the histogram of the present invention, e.g., through the use of a data processing API or the like, are preferably implemented in a high level procedural or object oriented programming language to communicate with a computer system. However, the program(s) can be implemented in assembly or machine language, if desired. In any case, the language may be a compiled or interpreted language, and combined with hardware implementations.

Thus, while the present invention has been described in connection with the preferred embodiments as illustrated, it is to be understood that other similar embodiments may be used or modifications and additions may be made to the described embodiments for performing the same function of the present invention without deviating therefrom.

For example, while exemplary embodiments of the invention are described in the context of a loosely coupled client-server network, one skilled in the art will recognize that the present invention is not limited thereto, and that the methods described herein may apply to any computing device or environment, such as a handheld or portable computer, and so on, whether wired or wireless, and may be applied to any number of such computing devices connected via a communications network, and interacting across the network. Therefore, the present invention should not be limited to any single embodiment, but rather should be construed in breadth and scope in accordance with the appended claims. Therefore, the scope of the claims shall not be limited by the illustrations or the preferred embodiments given in the description in the form of examples, but rather the claims shall encompass all of the features of patentable novelty that reside in the present invention, including all the features that would be treated as equivalents by the skilled in the art.

## Claims

1. A publishing system comprising:
- a plurality of internal editorial means for editing internal digital items in a proprietary digital format, said internal digital items including internal digital objects and internal logical pages grouping pluralities of said internal digital objects;
- wrapping means for encapsulating external digital items, created by external editorial means in a digital format native to said external editorial means, into digital entities provided with a common interface, said external digital items including external digital objects and external logical pages grouping pluralities of said external digital objects;
- said digital entities comprising first digital data representing said external digital items in their native format and additional digital data representing said external digital item in standard formats;
- at least one of said editorial means having means for accessing said internal digital items and said digital entities through said standard formats so as to turn said internal logical pages, external logical pages or combinations thereof into physical pages.

2. A publishing system according to claim 1, further comprising repository means for locally storing said digital items and said digital entities, said repository means being accessible by access server means, **characterized in that** said access server means comprise:
- an internal access server means providing internal services for reading from the repository, writing to the repository and querying the repository;
- middleware means bridging said external editorial means and said internal services, so as to export the functionality of said internal services.

3. A publishing system according to claims 1 or 2, **characterized in that** said internal and external digital items comprise one or more of text, images, charts, page layout information, or combinations thereof.

4. A publishing system according to any of the preceding claims, **characterized in that** said standard formats comprise one or more of the following formats:
- an image format for visualizing said external digital items;
- a graphical format for printing said external digital items.

5. A publishing system according to any of the claims 2 to 4, **characterized in that** said middleware means comprise means for returning digital items from the publishing system to the external editorial means in said native format of said editorial means.

6. A publishing system according to any of the preceding claims, **characterized in that** said external editorial means comprise means for retrieving page layout information provided within said publishing system.

7. A publishing system according to any of the preceding claims, **characterized in that** said editorial means comprise one or more of:
- a page design program;
- a text editor or word processor;
- a graphic editor;
- a supervising program.

8. A publishing system according to any of claims 2 to 7, **characterized in that** said middleware means comprise a plurality of web services generating a format field and providing standardized connections between the internal access server and the internal and external editorial means.

9. A publishing system according to claim 8, **characterized in that** said format field is described in SOAP/XML and HTTP is used for transmission.

10. A publishing system according to any claims from 1 to 8, **characterized in that** said digital entities are described in SOAP/XML and HTTP is used for transmission between said editorial means and said internal access server.

11. A publishing system according to any of the preceding claims, **characterized in that** at least one of said editorial means comprising means for digital item manipulation, management, sizing, layout and printing.

12. A publishing system according to any of the preceding claims, **characterized in that** said editorial means comprise means for performing an inheritance process wherein at least one digital item of a first logical page is inherited by at least a second logical page.

13. A publishing system according to claim 2 to 12, **characterized in that** said middleware means comprise a tool palette made available within said external editorial means.

14. A publishing system according to any of the preceding claims, wherein said first digital data and said additional data comprise links to files containing actual data.

15. A publishing system according to any of the preceding claims, **characterized in that** it comprises means for switching digital items between an unlocked status, indicating that the digital item is free for use by an editorial means, and a locked status, indicating that the digital item has already been reserved for use by another editorial means.

16. A method for integrating external editorial means within a publishing system comprising the steps of:
- encapsulating external digital items, created by external editorial means in a digital format native to said external editorial means, into digital entities provided with a common interface, said external digital items including external digital objects and external logical pages grouping pluralities of said external digital objects;
- encoding said digital entities through first digital data representing said external digital items in their native format and through additional digital data representing said external digital item in standard formats;
- providing at least one editorial means with means for accessing internal digital items created by internal editorial means and said digital entities through said standard formats so as to turn internal logical pages created by said internal editorial means, said external logical pages or combinations thereof into physical pages.

17. A method for integrating external editorial means within a publishing system according to claim 15 further comprising the steps of:
- providing repository means for locally storing said digital items and said digital entities and access server means to access said repository means, said access server means comprising internal access server means providing internal services for reading from the repository, writing to the repository and querying the repository;
- bridging said external editorial means and said internal services through middleware means exporting the functionality of said internal services.

18. A method for integrating external editorial means within a publishing system according to claim 16 or 17 **characterized in that** said internal and external digital items comprise one or more of text, images, charts, page layout information, or combinations thereof.

19. A method for integrating external editorial means within a publishing system according to any of claims 16 to 18, **characterized in that** said standard formats comprise one or more of the following formats:
- an image format for visualizing said external digital items;
- a graphical format for printing said external digital items.

20. A method for integrating external editorial means within a publishing system according to any of claims 17 to 19 further comprising the step of providing, in said middleware means, means for returning digital items from the publishing system to the external editorial means in said native format of said editorial means.

21. A method for integrating external editorial means within a publishing system according to any of claims 16 to 20, further comprising the step of providing, in said external editorial means, means for retrieving page layout information available within said publishing system.

22. A method for integrating external editorial means within a publishing system according to any of claims from 16 to 21, **characterized in that** said editorial means comprise one or more of:
- a page design program;
- a text editor or word processor;
- a graphic editor;
- a supervising program.

23. A method for integrating external editorial means within a publishing system according to any of claims 17 to 22, further comprising the step of providing, in said middleware means, a plurality of web services generating a format field and providing standardized connections between the internal access server and the internal and external editorial means.

24. A method for integrating external editorial means within a publishing system according to claim 23, further comprising the step of describing said format field in SOAP/XML and the step of using HTTP.

25. A method for integrating external editorial means within a publishing system according to any of claims 16 to 24, further comprising the step of describing said digital entities in SOAP/XML and using HTTP for transmission between said editorial means and said internal access server.

26. A method for integrating external editorial means within a publishing system according to any of claims 16 to 25, further comprising the step of providing means for digital item manipulation, management, sizing, layout and printing said within said editorial means.

27. A method for integrating external editorial means within a publishing system according to any of claims 16 to 26, further comprising the step of providing said editorial means with means for performing an inheritance process wherein at least one digital item of a first logical page is inherited by at least a second logical page.

28. A method for integrating external editorial means within a publishing system according to any of claims 17 to 27, further comprising the step of providing said middleware means with a tool palette made available within said external editorial means.

29. A method for integrating external editorial means within a publishing system according to any of claims 16 to 28, further comprising the step of providing said first digital data and said additional data with links to files containing actual data.

30. A method for integrating external editorial means within a publishing system according to any of claims 16 to 29, further comprising the step of switching digital items between an unlocked and a locked status, the unlocked status indicating that the digital item is free for use by an editorial means, and the locked status, indicating that the digital item has already been reserved for use by another editorial means.
